# EUROPEAN PATENT APPLICATION

(11) **EP 3 330 392 A1**
(43) Date of publication of application: **06.06.2018**
(21) Application number: 18000025.9
(22) Date of filing: 17.01.2014
(51) Int. Cl.: C22C 21/00, B23K 35/22, B23K 35/28, F28F 19/06, B32B 15/01, C22C 21/14, C22C 21/10, C22C 21/02, B23K 35/02, C23F 13/14, C23F 13/18, F28F 21/08, F28F 1/02, B23K 101/14

(54) **ALUMINUM ALLOY CLAD MATERIAL**

(30) Priority: 23.01.2013 JP 2013010116
(62) Divisional of application: 14743357.7
(71) Applicant: UACJ Corporation, Tokyo 100-0004 (JP)
(72) Inventor: Tanaka, Toshikazu, Tokyo, 100-0004 (JP); Shoji, Tomohiro, Tokyo, 100-0004 (JP); Fujimura, Ryoko, Tokyo, 100-0004 (JP); Yamashita, Naoki, Tokyo, 100-0004 (JP); Tanaka, Hirokazu, Tokyo, 100-0004 (JP)
(74) Representative: Flaccus, Rolf-Dieter

(57) **Abstract**

An aluminum alloy clad material can produce a heat exchanger tube that exhibits excellent outer-side corrosion resistance when formed into a tube.

The aluminum alloy clad material comprises a core material and a sacrificial anode material, one side of the core material being clad with the sacrificial anode material, the core material being formed of an Al-Mn-Cu alloy that comprises 0.6 to 2.0 mass% of Mn and 0.03 to 1.0 mass% of Cu, with the balance being aluminum and unavoidable impurities, the sacrificial anode material being formed of an Al-Zn-Cu alloy that comprises 0.5 to 6.0 mass% of Zn and 0.03 to 0.3 mass% of Cu, with the balance being aluminum and unavoidable impurities, and a relationship "Cu content (mass%) in sacrificial anode material ≤ Cu content (mass%) in core material" being satisfied.

## Description

### TECHNICAL FIELD

The present invention relates to an aluminum alloy clad material. More specifically, the invention relates to an aluminum alloy clad material that can produce a heat exchanger tube that exhibits excellent outer-side corrosion resistance when formed into a tube. The invention also relates to a heat exchanger that includes a tube obtained by forming the clad material.

### BACKGROUND ART

An aluminum alloy extruded tube or a tube obtained by bending an aluminum alloy sheet material has been used as a refrigerant tube (refrigerant passage) for an aluminum heat exchanger that is joined by brazing. Such a refrigerant tube is designed so that a sacrificial anode effect due to a Zn diffusion layer is achieved by thermally spraying Zn to the side of the extruded tube that forms the outer side of the refrigerant tube, or cladding the side of the tube (obtained by bending an aluminum alloy sheet material) that forms the outer side of the refrigerant tube with an Al-Zn-based alloy in order to improve the corrosion resistance of the outer side (that comes in contact with the atmosphere) of the refrigerant tube.

In recent years, a reduction in thickness and an improvement in corrosion resistance have been required for materials used to produce an automotive heat exchanger, and a decrease in corrosion rate of the sacrificial anode layer through a reduction in Zn content in the sacrificial anode material, and an increase in thickness of the sacrificial anode layer have been desired. However, it is difficult to reduce the amount of Zn thermally sprayed to the extruded tube from the viewpoint of thermal spraying efficiency. When using the tube obtained by bending an aluminum alloy sheet material, since the potential of the sacrificial anode material increases due to the effects of diffusion of Cu included in the core material (Al-Mn-Cu-based alloy), and it is difficult to achieve a potential difference sufficient to obtain the sacrificial anode effect when the amount of Zn is reduced, it is difficult to reduce the Zn content in the sacrificial anode material. It is difficult to increase the thickness of the sacrificial anode layer by increasing the cladding ratio from the viewpoint of production cost.

A brazing sheet that is provided with a potential gradient so that the potential increases from the outer side toward the inner side after brazing by increasing the Cu content in the filler metal situated on the inner side as compared with the core material, a brazing sheet that is designed so that the potential increases from outer side toward the inner side through a concentration gradient of Zn and Cu that is formed by adding Zn to the filler metal situated on the outer side, adding Cu to the filler metal situated on the inner side, and adjusting the ratio of Zn to Cu within a specific range, have been proposed. However, since a layer that is formed by Cu diffused from the filler metal and has a higher potential is thin, and the potential difference between the layer having a higher potential and the core material is small, most of the core material is consumed due to corrosion, and the effect of suppressing occurrence of a through-hole is insufficient immediately before a through-hole occurs.

### RELATED-ART DOCUMENT

### PATENT DOCUMENT

Patent Document 1: JP-A-2011-224656
Patent Document 2: JP-A-2009-127121
Patent Document 3: JP-A-2007-247021

### SUMMARY OF THE INVENTION

### TECHNICAL PROBLEM

The inventors of the invention conducted experiments and studies with regard to the effects of the configuration of an aluminum alloy clad material that forms a tube obtained by bending an aluminum alloy sheet material, and the alloy composition of each layer of the clad material, on corrosion resistance. As a result, the inventors found that, when the aluminum alloy clad material that forms the tube has a two-layer structure that includes a core material and a sacrificial anode material, or a three-layer structure that includes a core material, a sacrificial anode material, and an inner cladding material that is higher in potential than the core material, one side of the core material being clad with the sacrificial anode material, and the other side of the core material being clad with the inner cladding material, and the sacrificial anode material includes a small amount of Cu, the corrosion rate of the sacrificial anode material is reduced so that the sacrificial anode material remains for a long time, occurrence of a through-hole can be suppressed, and the corrosion resistance of the outer side (that comes in contact with the atmosphere) is improved. When the aluminum alloy clad material has the three-layer structure, the core material exhibits a sacrificial anode effect on the inner cladding material, and the sacrificial anode material and the core material function as a sacrificial anode layer with respect to the inner cladding material (i.e., the thickness of the sacrificial anode layer increases). In this case, it is possible to suppress occurrence of a through-hole for a longer time.

The invention was conceived as a result of conducting further experiments and studies based on this finding. An object of the invention is to provide an aluminum alloy clad material that can produce a heat exchanger tube that exhibits excellent outer-side corrosion resistance when formed into a tube, and a heat exchanger that includes a tube obtained by forming the clad material.

### SOLUTION TO PROBLEM

(1) According to one aspect of the invention, an aluminum alloy clad material includes a core material and a sacrificial anode material, one side of the core material being clad with the sacrificial anode material, the core material being formed of an Al-Mn-Cu alloy that includes 0.6 to 2.0% of Mn and 0.03 to 1.0% of Cu, with the balance being aluminum and unavoidable impurities, the sacrificial anode material being formed of an Al-Zn-Cu alloy that includes 0.5 to 6.0% of Zn and 0.03 to 0.3% of Cu, with the balance being aluminum and unavoidable impurities, and the relationship "Cu content (%) in sacrificial anode material ≤ Cu content (%) in core material" being satisfied. Note that the unit "%" used herein in connection with each alloy component refers to "mass%".
(2) In the aluminum alloy clad material according to (1), the core material may further include either or both of 1.5% or less of Si and 0.7% or less of Fe.
(3) In the aluminum alloy clad material according to (1) or (2), the core material may further include 0.01 to 0.3% of Ti.
(4) According to another aspect of the invention, an aluminum alloy clad material includes a core material, an inner cladding material, and a sacrificial anode material, one side of the core material being clad with the inner cladding material, the other side of the core material being clad with the sacrificial anode material, the core material being formed of an Al-Mn-Cu alloy that includes 0.6 to 2.0% of Mn and 0.03 to 1.0% of Cu, with the balance being aluminum and unavoidable impurities, the inner cladding material being formed of an Al-Mn-Cu alloy that includes 0.6 to 2.0% of Mn and 0.2 to 1.5% of Cu, with the balance being aluminum and unavoidable impurities, the sacrificial anode material being formed of an Al-Zn-Cu alloy that includes 0.5 to 6.0% of Zn and 0.03 to 0.3% of Cu, with the balance being aluminum and unavoidable impurities, and the relationship "Cu content (%) in sacrificial anode material ≤ Cu content (%) in core material ≤ Cu content (%) in inner cladding material" being satisfied.
(5) In the aluminum alloy clad material according to (4), the core material may further include either or both of 1.5% or less of Si and 0.7% or less of Fe.
(6) In the aluminum alloy clad material according to (4) or (5), the core material may further include 0.01 to 0.3% of Ti.
(7) In the aluminum alloy clad material according to any one of (4) to (6), the inner cladding material may further include either or both of 1.5% or less of Si and 0.7% or less of Fe.
(8) In the aluminum alloy clad material according to any one of (4) to (7), the inner cladding material may further include 0.01 to 0.3% of Ti.
(9) In the aluminum alloy clad material according to any one of (1) to (8), the sacrificial anode material may further include one or two or more of 1.5% or less of Si, 0.7% or less of Fe, and 1.5% or less of Mn.
(10) According to a further aspect of the invention, a heat exchanger is produced by forming the aluminum alloy clad material according to any one of (1) to (9) into a tube so that the inner cladding material defines a refrigerant passage, and the sacrificial anode material comes in contact with the atmosphere, assembling an aluminum fin with the tube, and brazing the aluminum fin and the tube.

### ADVANTAGEOUS EFFECTS OF THE INVENTION

The aspects of the invention thus provide an aluminum alloy clad material that exhibits excellent outer-side corrosion resistance when formed into a tube, and may suitably be used as a material for forming a tube for a heat exchanger (particularly an automotive heat exchanger), and a heat exchanger that includes a tube obtained by forming the aluminum alloy clad material.

### BRIEF DESCRIPTION OF DRAWINGS

FIG. 1 is a cross-sectional view illustrating an example of a heat exchanger tube obtained by forming an aluminum alloy clad material according to one embodiment of the invention.
FIG. 2 is a cross-sectional view illustrating another example of a heat exchanger tube obtained by forming an aluminum alloy clad material according to one embodiment of the invention.

### DESCRIPTION OF EMBODIMENTS

Aluminum alloy clad materials according to the embodiments of the invention have a two-layer structure that includes a core material and a sacrificial anode material, or a three-layer structure that includes a core material, a sacrificial anode material, and an inner cladding material that is higher in potential than the core material, one side of the core material being clad with the sacrificial anode material, and the other side of the core material being clad with the inner cladding material, wherein the sacrificial anode material includes Cu. When the aluminum alloy clad material is formed into a tube so that the inner cladding material defines a refrigerant passage, and the sacrificial anode material comes in contact with the atmosphere, and is assembled into a heat exchanger, the corrosion rate of the sacrificial anode material is reduced, and the sacrificial anode effect of the sacrificial anode material is maintained for a long time. Therefore, it is possible to suppress occurrence of a through-hole for a long time, and improve the corrosion resistance of the outer side (that comes in contact with the atmosphere). When the aluminum alloy clad material has the three-layer structure, the core material exhibits a sacrificial anode effect on the inner cladding material, and the sacrificial anode material and the core material function as a sacrificial anode layer with respect to the inner cladding material (i.e., the thickness of the sacrificial anode layer increases). In this case, it is possible to suppress occurrence of a through-hole for a longer time.

When the aluminum alloy clad material has the two-layer structure, the core material is formed of an Al-Mn-Cu alloy that includes 0.6 to 2.0% of Mn and 0.03 to 1.0% of Cu, with the balance being aluminum and unavoidable impurities, and the sacrificial anode material is formed of an Al-Zn-Cu alloy that includes 0.5 to 6.0% of Zn and 0.03 to 0.3% of Cu, with the balance being aluminum and unavoidable impurities. Note that the relationship "Cu content (%) in sacrificial anode material ≤ Cu content (%) in core material" is satisfied.

The core material may include either or both of 1.5% or less of Si and 0.7% or less of Fe, and may include 0.01 to 0.3% of Ti. The sacrificial anode material may include one or two or more of 1.5% or less of Si, 0.7% or less of Fe, and 1.5% or less of Mn.

When the aluminum alloy clad material has the three-layer structure, the core material is formed of an Al-Mn-Cu alloy that includes 0.6 to 2.0% of Mn and 0.03 to 1.0% of Cu, with the balance being aluminum and unavoidable impurities, the inner cladding material is formed of an Al-Mn-Cu alloy that includes 0.6 to 2.0% of Mn and 0.2 to 1.5% of Cu, with the balance being aluminum and unavoidable impurities, and the sacrificial anode material is formed of an Al-Zn-Cu alloy that includes 0.5 to 6.0% of Zn and 0.03 to 0.3% of Cu, with the balance being aluminum and unavoidable impurities. Note that the relationship "Cu content (%) in sacrificial anode material ≤ Cu content (%) in core material ≤ Cu content (%) in inner cladding material" is satisfied.

The core material may include either or both of 1.5% or less of Si and 0.7% or less of Fe, and may include 0.01 to 0.3% of Ti. The inner cladding material may include either or both of 1.5% or less of Si and 0.7% or less of Fe, and may include 0.01 to 0.3% of Ti. The sacrificial anode material may include one or two or more of 1.5% or less of Si, 0.7% or less of Fe, and 1.5% or less of Mn.

The effects of each alloy component included in the core material, the inner cladding material, and the sacrificial anode material, and the reasons for which the content of each alloy component is limited as described above, are described below. Sacrificial anode material

### Zn

Zn included in the sacrificial anode material increases the potential of the sacrificial anode material. Zn is added to the sacrificial anode material in order to adjust adjust the balance in potential with the core material and the inner cladding material. The Zn content is preferably 0.5 to 6.0%. If the Zn content is less than 0.5%, a sufficient effect may not be obtained. If the Zn content exceeds 6.0%, the self-corrosion rate may increase, and the corrosion-proof lifetime may decrease. The Zn content is more preferably 1.0 to 5.0%.

### Cu

Cu reduces the corrosion rate of the sacrificial anode material. The Cu content is preferably 0.03 to 0.3%. If the Cu content is less than 0.03%, the corrosion rate of the sacrificial anode material may not be sufficiently reduced. If the Cu content exceeds 0.3%, it may be difficult to obtain a sacrificial anode effect due to an increase in potential. The Cu content is more preferably 0.03 to 0.2%.

### Si

Si improves the strength of the sacrificial anode material. The Si content is preferably 1.5% or less. If the Si content exceeds 1.5%, the self-corrosion rate may increase. The Si content is more preferably 0.5% or less.

### Fe

Fe improves the strength of the sacrificial anode material. The Fe content is preferably 0.7% or less. If the Fe content exceeds 0.7%, the self-corrosion rate may increase.

### Mn

Mn improves the strength of the sacrificial anode material. The Mn content is preferably 1.5% or less. If the Mn content exceeds 1.5%, the self-corrosion rate may increase. The Mn content is more preferably 0.5% or less. Note that the advantageous effects of the invention are not impaired even when the sacrificial anode material includes 0.3% or less of In, 0.3% or less of Sn, 0.3% or less of Ti, 0.3% or less of V, 0.3% or less of Cr, 0.3% or less of Zr, and 0.3% or less of B.

### Core material

### Mn

Mn improves the strength of the core material. The Mn content is preferably 0.6 to 2.0%. If the Mn content is less than 0.6%, a sufficient effect may not be obtained. If the Mn content exceeds 2.0%, it may be difficult to roll the material. The Mn content is more preferably 1.0 to 2.0%.

### Cu

Cu increases the potential of the core material. Cu is added to the core material in order to adjust the balance in potential with the sacrificial anode material and the inner cladding material. If the Cu content in the core material is lower than the Cu content in the sacrificial anode material, it may be difficult to provide a potential difference between the core material and the sacrificial anode material. Therefore, it is preferable that the Cu content in the core material be equal to or higher than the Cu content in the sacrificial anode material. Cu included in the core material is diffused into the sacrificial anode material during brazing to reduce the potential difference between the core material and the sacrificial anode material. Therefore, the Cu content is preferably set to 1.5% or less. When the aluminum alloy clad material has the three-layer structure, it may be difficult to provide a potential difference between the core material and the inner cladding material if the Cu content in the core material is equal to or higher than the Cu content in the inner cladding material. Therefore, it is preferable that the Cu content in the core material be lower than the Cu content in the inner cladding material. The Cu content is more preferably 0.6% or less.

### Si

Si improves the strength of the core material. The Si content is preferably 1.5% or less. If the Si content exceeds 1.5%, the melting point of the core material may decrease, and the core material may be easily melted during brazing. The Si content is more preferably 0.8% or less.

### Fe

Fe improves the strength of the core material. The Fe content is preferably 0.7% or less. If the Fe content exceeds 0.7%, the self-corrosion rate may increase.

### Ti

Ti is separated into a high-concentration area and a low-concentration area in the thickness direction of the core material. These areas are distributed alternately in layers. Since the low-concentration area is preferentially corroded as compared with the high-concentration area, corrosion occurs in layers. This prevents the progress of corrosion in the thickness direction, and improves the corrosion resistance of the core material. The Ti content is preferably 0.01 to 0.3%. If the Ti content is less than 0.01%, a sufficient effect may not be obtained. If the Ti content exceeds 0.3%, a large crystallized product may be produced, and formability may deteriorate. Note that the advantageous effects of the invention are not impaired even when the core material includes 0.3% or less of V, 0.3% or less of Cr, 0.3% or less of Zr, and 0.3% or less of B.

### Inner cladding material

### Mn

Mn improves the strength of the inner cladding material. The Mn content is preferably 0.6 to 2.0%. If the Mn content is less than 0.6%, a sufficient effect may not be obtained. If the Mn content exceeds 2.0%, it may be difficult to roll the material. The Mn content is more preferably 1.0 to 2.0%.

### Si

Si improves the strength of the inner cladding material. The Si content is preferably 1.5% or less. If the Si content exceeds 1.5%, the melting point of the inner cladding material may decrease, and the inner cladding material may be easily melted during brazing.

### Fe

Fe improves the strength of the inner cladding material. The Fe content is preferably 0.7% or less. If the Fe content exceeds 0.7%, the self-corrosion rate may increase.

### Cu

Cu increases the potential of the inner cladding material. Cu is added to the inner cladding material in order to adjust the balance in potential with the core material. The Cu content is preferably set to 0.2 to 1.5% so that the relationship "Cu content (%) in core material ≤ Cu content (%) in inner cladding material" is satisfied. If the Cu content exceeds 1.5%, the melting point of the inner cladding material may decrease, and the inner cladding material may be easily melted during brazing. If the Cu content in the inner cladding material is lower than the Cu content in the core material, the core material may not function as a sacrificial anode material with respect to the inner cladding material, and the corrosion-proof lifetime may decrease. The Cu content in the inner cladding material is more preferably 0.8% or less.

### Ti

Ti is separated into a high-concentration area and a low-concentration area in the thickness direction of the inner cladding material. These areas are distributed alternately in layers. Since the low-concentration area is preferentially corroded as compared with the high-concentration area, corrosion occurs in layers. This prevents the progress of corrosion in the thickness direction, and improves the corrosion resistance of the inner cladding material. The Ti content is preferably 0.01 to 0.3%. If the Ti content is less than 0.01%, a sufficient effect may not be obtained. If the Ti content exceeds 0.3%, a large crystallized product may be produced, and formability may deteriorate. Note that the advantageous effects of the invention are not impaired even when the inner cladding material includes 0.3% or less of V, 0.3% or less of Cr, 0.3% or less of Zr, and 0.3% or less of B.

Note that it is undesirable to limit the Si content and the Fe content in the sacrificial anode material, the core material, and the inner cladding material to less than 0.03% since the production cost increases when a high-purity ground metal is used. When the aluminum alloy clad material has the three-layer structure, it is preferable to set the cladding ratio of the sacrificial anode material to 5 to 30%, and set the cladding ratio of the inner cladding material to 5 to 30%. If the cladding ratio of the sacrificial anode material is less than 5%, the Zn concentration in the sacrificial anode material may decrease due to diffusion during brazing, and a sufficient sacrificial anode effect may not be obtained. If the cladding ratio of the sacrificial anode material exceeds 30%, it may be difficult to implement clad rolling. The cladding ratio of the sacrificial anode material is more preferably 10 to 30%. If the cladding ratio of the inner cladding material is less than 5%, the Cu concentration in the inner cladding material may decrease due to diffusion during brazing, and the potential difference between the inner cladding material and the core material may decrease, whereby it may be difficult for the core material to exhibit a sacrificial anode effect. If the cladding ratio of the inner cladding material exceeds 30%, it may be difficult to implement clad rolling. The cladding ratio of the inner cladding material is more preferably 10 to 30%.

A heat exchanger is produced by forming the aluminum alloy clad material into a tube so that the inner cladding material defines a refrigerant passage, and the sacrificial anode material comes in contact with the atmosphere, assembling an aluminum fin with the outer side (that comes in contact with the atmosphere) of the tube, or the outer side and the inner side (that defines the refrigerant passage) of the tube, and brazing the aluminum fin and the tube.

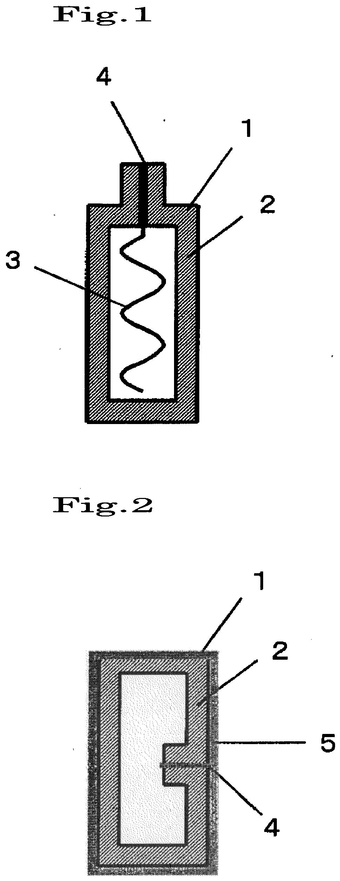

As illustrated in FIG. 1, a tube material 1 may be produced by forming an aluminum alloy clad material 2 into a tube, inserting an inner fin 3 that is formed of a brazing sheet provided with a filler metal on each side, and brazing a joint 4 of the tube utilizing the filler metal provided to the inner fin 3. As illustrated in FIG. 2, the tube material 1 may also be produced by forming the aluminum alloy clad material 2 into a tube after applying a filler metal paste 5 to the sacrificial anode material of the aluminum alloy clad material 2 (or applying the filler metal paste 5 to the sacrificial anode material of the aluminum alloy clad material 2 after forming the aluminum alloy clad material 2 into a tube), and brazing the joint 4 utilizing the filler metal paste 5.

When a heat exchanger is produced by forming the aluminum alloy clad material into a tube so that the core material (when the aluminum alloy clad material has the two-layer structure) or the inner cladding material (when the aluminum alloy clad material has the three-layer structure) defines a refrigerant passage, and the sacrificial anode material comes in contact with the atmosphere (i.e., is situated on the outer side), assembling an aluminum fin with the tube, and brazing the aluminum fin and the tube at 600°C for 3 minutes, the sacrificial anode material, the core material, and the inner cladding material included in the tube satisfy the relationship "potential of sacrificial anode material < potential of core material < potential of inner cladding material", and the sacrificial anode material exhibits a sacrificial anode effect on the core material. The sacrificial anode material according to the embodiments of the invention that is formed of the Al-Zn-Cu-based alloy shows a low corrosion rate as compared with a sacrificial anode material that is formed of a normal Al-Zn alloy, and exhibits a sacrificial anode effect for a long time. Therefore, an improvement in corrosion resistance can be achieved. When the aluminum alloy clad material has the three-layer structure, the core material exhibits a sacrificial anode effect on the inner cladding material, and the thickness of the sacrificial anode layer increases. Since the inner cladding material that has a higher potential remains even when most of the sacrificial anode material and the core material have been consumed due to corrosion, it is possible to suppress occurrence of a through-hole, and improve the corrosion resistance of the outer side (that comes in contact with the atmosphere).

### EXAMPLES

The invention is further described below by way of examples and comparative examples to demonstrate the advantageous effects of the invention. Note that the following examples are for illustration purposes only, and the invention is not limited to the following examples.

### Example 1

An ingot of a sacrificial anode material alloy (S1 to S11) having the composition shown in Table 1, and ingots of a core material alloy and an inner cladding material alloy (C1 to C20) having the composition shown in Table 2, were cast using a semi-continuous casting method. The ingot of the sacrificial anode material alloy was homogenized at 500°C for 8 hours, and hot-rolled (start temperature: 500°C) to a given thickness. The ingot of the core material alloy was homogenized at 500°C for 8 hours, and machined. The ingot of the inner cladding material alloy was homogenized at 500°C for 8 hours, and hot-rolled (start temperature: 500°C) to a given thickness.

The hot-rolled sacrificial anode material alloy and the hot-rolled inner cladding material alloy were then machined. The aluminum alloys were stacked in the combination shown in Table 3, hot-rolled (start temperature: 500°C) to a thickness of 3 mm, cold-rolled, subjected to process annealing at 400°C, and then cold-rolled to obtain an aluminum alloy clad sheet material (specimens No. 1 to No. 31) having a thickness of 0.2 mm.

### Comparative Example 1

An ingot of a sacrificial anode material alloy (S12 to S18) having the composition shown in Table 1, and ingots of a core material alloy and an inner cladding material alloy (C21 to C26) having the composition shown in Table 2, were cast using a semi-continuous casting method. The ingot of the sacrificial anode material alloy (S1), and the ingots of the core material alloy and the inner cladding material alloy (C1 and C11) that were cast in Example 1 were also used in Comparative Example 1. The ingot of the sacrificial anode material alloy was homogenized at 500°C for 8 hours, and hot-rolled (start temperature: 500°C) to a given thickness. The ingot of the core material alloy was homogenized at 500°C for 8 hours, and machined. The ingot of the inner cladding material alloy was homogenized at 500°C for 8 hours, and hot-rolled (start temperature: 500°C) to a given thickness. In Tables 1 and 2, the values that fall outside the scope of the invention are underlined.

The hot-rolled sacrificial anode material alloy and the hot-rolled inner cladding material alloy were then machined. The aluminum alloys were stacked in the combination shown in Table 4, hot-rolled (start temperature: 500°C) to a thickness of 3 mm, cold-rolled, subjected to process annealing at 400°C, and then cold-rolled to obtain an aluminum alloy clad sheet material (specimens No. 101 to No. 114) having a thickness of 0.2 mm.

The resulting specimen was heated at 600°C for 3 minutes (equivalent to the brazing conditions), and subjected to potential measurement, a tensile test, and a corrosion test as described below. The results are shown in Tables 3 and 4.

### Potential measurement

The potential of the specimen was measured at room temperature in a 5% NaCl aqueous solution of which the pH was adjusted to 3 using acetic acid. The potential of the sacrificial anode material was measured in a state in which the area other than the surface of the sacrificial anode material was masked, and the potential of the inner cladding material was measured in a state in which the area other than the surface of the inner cladding material was masked. When measuring the potential of the core material, the specimen was ground from the sacrificial anode material so that the center of the core material was exposed, and the potential of the core material was measured in a state in which the area other than the exposed core material was masked.

### Tensile test

A JIS-5 specimen was prepared using the resulting specimen, and subjected to a tensile test in accordance with JIS Z 2241. A case where the tensile strength of the specimen was 95 MPa or more (equivalent to the strength of a 3003 alloy O-material) was determined to be acceptable.

### Corrosion test

The specimen (that was masked so that the sacrificial anode material was exposed) was subjected to a SWAAT test (ASTM G85) to evaluate corrosion resistance. A specimen in which a through-hole was not observed when 1000 hours had elapsed was evaluated as "Good", a specimen in which a through-hole was not observed when 1500 hours had elapsed was evaluated as "Very good", and a specimen in which a through-hole occurred before 1000 hours elapsed was evaluated as "Bad".

**TABLE 1**

| No. | Component (mass%) | | | | | | |
|---|---|---|---|---|---|---|---|
| | Si | Fe | Cu | Mn | Zn | Other | Al |
| S1 | 0.1 | 0.3 | 0.1 | 0.0 | 2.5 | | Balance |
| S2 | 0.1 | 0.2 | 0.3 | 0.0 | 0.6 | | Balance |
| S3 | 0.1 | 0.3 | 0.1 | 0.0 | 1.2 | | Balance |
| S4 | 0.1 | 0.2 | 0.03 | 0.0 | 5.0 | | Balance |
| S5 | 0.1 | 0.2 | 0.1 | 0.0 | 6.0 | | Balance |
| S6 | 0.4 | 0.1 | 0.1 | 0.0 | 2.0 | | Balance |
| S7 | 0.2 | 0.5 | 0.1 | 0.0 | 2.0 | | Balance |
| S8 | 0.1 | 0.1 | 0.1 | 0.5 | 2.5 | | Balance |
| S9 | 1.2 | 0.0 | 0.3 | 0.2 | 3.8 | | Balance |
| S10 | 0.2 | 0.2 | 0.1 | 0.0 | 2.0 | Ti: 0.05, Cr: 0.05, V: 0.05, B: 0.05 | Balance |
| S11 | 0.2 | 0.2 | 0.1 | 1.4 | 1.5 | Sn: 0.01, In: 0.01 | Balance |
| S12 | 2.0 | 0.1 | 0.1 | 0.2 | 3.0 | | Balance |
| S13 | 0.4 | 1.0 | 0.1 | 0.4 | 4.5 | | Balance |
| S14 | 0.3 | 0.4 | 0.02 | 0.2 | 3.5 | | Balance |
| S15 | 0.4 | 0.4 | 0.4 | 0.1 | 2.0 | | Balance |
| S16 | 0.4 | 0.3 | 0.1 | 2.0 | 5.0 | | Balance |
| S17 | 0.5 | 0.4 | 0.1 | 0.5 | 0.1 | | Balance |
| S18 | 0.3 | 0.2 | 0.1 | 0.2 | 8.0 | | Balance |

**TABLE 2**

| No. | Component (mass%) | | | | | |
|---|---|---|---|---|---|---|
| | Si | Fe | Cu | Mn | Other | Al |
| C1 | 0.7 | 0.1 | 0.3 | 1.5 | | Balance |
| C2 | 0.5 | 0.2 | 0.03 | 1.4 | | Balance |
| C3 | 0.6 | 0.1 | 0.3 | 0.6 | | Balance |
| C4 | 0.1 | 0.1 | 0.3 | 1.2 | | Balance |
| C5 | 0.1 | 0.1 | 0.3 | 2.0 | | Balance |
| C6 | 1.3 | 0.1 | 0.3 | 1.2 | | Balance |
| C7 | 0.2 | 0.6 | 0.4 | 1.2 | | Balance |
| C8 | 0.2 | 0.2 | 0.1 | 1.2 | Ti: 0.2 | Balance |
| C9 | 0.7 | 0.2 | 0.3 | 1.2 | Cr: 0.05, V: 0.05, B: 0.05 | Balance |
| C10 | 0.7 | 0.1 | 0.6 | 1.5 | | Balance |
| C11 | 0.6 | 0.1 | 0.3 | 0.7 | | Balance |
| C12 | 0.2 | 0.2 | 0.4 | 1.2 | | Balance |
| C13 | 0.2 | 0.2 | 0.6 | 1.2 | | Balance |
| C14 | 0.2 | 0.2 | 1.0 | 1.2 | | Balance |
| C15 | 0.2 | 0.2 | 0.4 | 2.0 | | Balance |
| C16 | 1.3 | 0.2 | 0.2 | 1.0 | | Balance |
| C17 | 0.2 | 0.2 | 1.4 | 1.2 | | Balance |
| C18 | 0.7 | 0.2 | 0.8 | 1.2 | | Balance |
| C19 | 0.2 | 0.5 | 0.3 | 1.2 | Ti: 0.2 | Balance |
| C20 | 0.4 | 0.2 | 0.6 | 1.2 | Cr: 0.05, V: 0.05, B: 0.05 | Balance |
| C21 | 2.0 | 0.3 | 0.3 | 1.2 | | Balance |
| C22 | 0.5 | 1.0 | 0.2 | 1.3 | | Balance |
| C23 | 0.4 | 0.4 | 0.1 | 0.3 | | Balance |
| C24 | 0.9 | 0.3 | 2.0 | 1.2 | | Balance |
| C25 | 0.4 | 0.5 | 1.2 | 2.5 | | Balance |
| C26 | 0.3 | 0.4 | 0.02 | 1.4 | | Balance |

**TABLE 3**

| Specimen No. | Specimen | | | | | Potential (mV vs SCE) | | | Tensile strength (MPa) | SWAAT test |
|---|---|---|---|---|---|---|---|---|---|---|
| | Sacrificial anode material | | Core material | Inner cladding material | | Sacrificial anode material | Core material | Inner cladding material | | |
| | No. | Cladding ratio (%) | No. | No. | Cladding ratio (%) | | | | | |
| 1 | S1 | 10 | C1 | - | - | -780 | -670 | - | 140 | Good |
| 2 | S1 | 20 | C1 | - | - | -830 | -670 | - | 135 | Good |
| 3 | S2 | 20 | C1 | - | - | -710 | -670 | - | 145 | Good |
| 4 | S3 | 20 | C1 | - | - | -750 | -670 | - | 140 | Good |
| 5 | S4 | 20 | C1 | - | - | -875 | -670 | - | 135 | Good |
| 6 | S5 | 20 | C1 | - | - | -880 | -670 | - | 140 | Good |
| 7 | S6 | 20 | C1 | - | - | -810 | -670 | - | 140 | Good |
| 8 | S7 | 20 | C1 | - | - | -810 | -670 | - | 130 | Good |
| 9 | S8 | 20 | C1 | - | - | -820 | -670 | - | 130 | Good |
| 10 | S9 | 20 | C1 | - | - | -810 | -670 | - | 145 | Good |
| 11 | S10 | 20 | C1 | - | - | -820 | -670 | - | 130 | Good |
| 12 | S11 | 20 | C1 | - | - | -880 | -670 | - | 135 | Good |
| 13 | S4 | 20 | C2 | - | - | -875 | -685 | - | 120 | Good |
| 14 | S1 | 20 | C1 | C7 | 20 | -830 | -670 | -660 | 145 | Very good |
| 15 | S1 | 10 | C1 | C7 | 20 | -780 | -670 | -660 | 150 | Very good |
| 16 | S1 | 20 | C1 | C7 | 10 | -830 | -670 | -665 | 140 | Very good |
| 17 | S1 | 20 | C3 | C11 | 20 | -830 | -680 | -670 | 140 | Very good |
| 18 | S1 | 20 | C4 | C12 | 20 | -830 | -675 | -660 | 145 | Very pood |
| 19 | S1 | 20 | C5 | C13 | 20 | -830 | -665 | -645 | 145 | Very good |
| 20 | S1 | 20 | C6 | C14 | 20 | -830 | -660 | -640 | 150 | Very good |
| 21 | S1 | 20 | C7 | C15 | 20 | -830 | -670 | -665 | 145 | Very good |
| 22 | S1 | 20 | C8 | C16 | 20 | -830 | -690 | -670 | 140 | Very good |
| 23 | S1 | 20 | C9 | C17 | 20 | -830 | -670 | -610 | 155 | Very good |
| 24 | S1 | 20 | C1 | C18 | 20 | -830 | -670 | -645 | 145 | Very good |
| 25 | S1 | 20 | C1 | C19 | 20 | -830 . | -670 | -670 | 140 | Very good |
| 26 | S1 | 20 | C1 | C20 | 20 | -830 | -670 | -650 | 145 | Very good |
| 27 | S1 | 20 | C10 | C14 | 20 | -830 | -650 | -640 | 160 | Very good |
| 28 | S1 | 20 | C11 | C10 | 20 | -830 | -670 | -650 | 150 | Very good |
| 29 | S1 | 20 | C12 | C10 | 20 | -830 | -665 | -650 | 150 | Very good |
| 30 | S1 | 20 | C13 | C14 | 20 | -830 | -645 | -640 | 160 | Very good |
| 31 | S1 | 20 | C14 | C17 | 20 | -830 | -640 | -610 | 175 | Very good |

**TABLE 4**

| Specimen No. | Specimen | | | | | Potential (mV vs SCE) | | | Tensile strength (MPa) | SWAAT test |
|---|---|---|---|---|---|---|---|---|---|---|
| | Sacrificial anode material | | Core material | Inner cladding material | | Sacrificial anode material | Core material | Inner cladding material | | |
| | No. | Cladding ratio (%) | No. | No. | Cladding ratio (%) | | | | | |
| 101 | S12 | 20 | C1 | - | - | -820 | -670 | - | 140 | Bad |
| 102 | S13 | 20 | C1 | - | - | -850 | -670 | - | 135 | Bad |
| 103 | S14 | 20 | C1 | - | - | -835 | -670 | - | 130 | Bad |
| 104 | S15 | 20 | C11 | - | - | -790 | -680 | - | 145 | Bad |
| 105 | S16 | 20 | C1 | - | - | -860 | -670 | - | 150 | Bad |
| 106 | S17 | 20 | C1 | - | - | -680 | -670 | - | 140 | Bad |
| 107 | S18 | 20 | C1 | - | - | -880 | -670 | - | 145 | Bad |
| 108 | S1 | 20 | C26 | - | - | -780 | -685 | - | 120 | Bad |
| 109 | S12 | 20 | C1 | C7 | 20 | -820 | -670 | -660 | 145 | Bad |
| 110 | S1 | 20 | C21 | C10 | 20 | Core material melted | | | | |
| 111 | S1 | 20 | C22 | C10 | 20 | -830 | -680 | -650 | 145 | Bad |
| 112 | S1 | 20 | C23 | C10 | 20 | -830 | -685 | -650 | 95 | Good |
| 113 | S1 | 20 | C1 | C24 | 20 | Inner cladding material melted | | | | |
| 114 | S1 | 20 | C1 | C25 | 20 | Cracks occurred during rolling | | | | |

As shown in Table 3, when subjecting specimens No. 1 to No. 31 according to the invention to the SWAAT test, a through-hole was not observed when 1000 hours had elapsed. In particular, occurrence of a through-hole was suppressed for a longer time when using specimens No. 14 to No. 31 in which the inner cladding material was provided. When a heat exchanger was produced by forming each of these aluminum alloy clad materials into a tube so that the inner cladding material defines a refrigerant passage, and the sacrificial anode material comes in contact with the atmosphere (situated on the outer side), assembling an aluminum fin with the tube, and brazing the aluminum fin and the tube at 600°C for 3 minutes, the outer side (that comes in contact with the atmosphere) of the tube exhibited improved corrosion resistance.

As shown in Table 4, the amount of self-corrosion of the sacrificial anode material increased, and a through-hole occurred during the SWAAT test when the Si content in the sacrificial anode material was high (specimens No. 101 and No. 109), when the Fe content in the sacrificial anode material was high (specimen No. 102), or when the Mn content in the sacrificial anode material was high (specimen No. 105). The amount of self-corrosion of the sacrificial anode material increased, and a through-hole occurred during the SWAAT test when the Cu content in the sacrificial anode material was low (specimen No. 103). The sacrificial anode effect of the sacrificial anode material was insufficient, and a through-hole occurred during the SWAAT test when the Cu content in the sacrificial anode material was high (specimen No. 104), or when the Zn content in the sacrificial anode material was low (specimen No. 106). The amount of self-corrosion of the sacrificial anode material increased, and a through-hole occurred during the SWAAT test when the Zn content in the sacrificial anode material was high (specimen No. 107). The sacrificial anode effect of the sacrificial anode material was insufficient, and a through-hole occurred during the SWAAT test when the Cu content in the core material was low (specimen No. 108).

The core material was melted during brazing when the Si content in the core material was high (specimen No. 110). The amount of self-corrosion of the core material increased, and a through-hole occurred during the SWAAT test when the Fe content in the core material was high (specimen No. 111). Specimen No. 112 exhibited low tensile strength since the Mn content in the core material was low.

The inner cladding material was melted during brazing when the Cu content in the inner cladding material was high (specimen No. 113). Cracks occurred during cold rolling when the Mn content in the inner cladding material was high (specimen No. 114), and a sound clad material could not be obtained.

### REFERENCE SIGNS LIST

- 1: Tube material
- 2: Aluminum alloy clad material
- 3: Inner fin
- 4: Joint
- 5: Filler metal paste

## Claims

1. An aluminum alloy clad material comprising a core material and a sacrificial anode material, one side of the core material being clad with the sacrificial anode material, the core material being formed of an Al-Mn-Cu alloy that comprises 0.6 to 2.0 mass% of Mn and 0.03 to 1.0 mass% of Cu, with the balance being aluminum and unavoidable impurities, the sacrificial anode material being formed of an Al-Zn-Cu alloy that comprises 0.5 to 6.0 mass% of Zn and 0.03 to 0.3 mass% of Cu, with the balance being aluminum and unavoidable impurities, and a relationship "Cu content (mass%) in sacrificial anode material ≤ Cu content (mass%) in core material" being satisfied.

2. The aluminum alloy clad material according to claim 1, wherein the core material further comprises either or both of 1.5 mass% or less of Si and 0.7 mass% or less of Fe.

3. The aluminum alloy clad material according to claim 1 or 2, wherein the core material further comprises 0.01 to 0.3 mass% of Ti.

4. The aluminum alloy clad material according to any one of claims 1 to 3, wherein the sacrificial anode material further comprises one or two or more of 1.5 mass% or less of Si, 0.7 mass% or less of Fe, and 1.5 mass% or less of Mn.

5. A heat exchanger produced by forming the aluminum alloy clad material according to any one of claims 1 to 4 into a tube so that the core material defines a refrigerant passage, and the sacrificial anode material comes in contact with the atmosphere, assembling an aluminum fin with the tube, and brazing the aluminum fin and the tube.
